# EUROPEAN PATENT APPLICATION

(11) **EP 2 120 175 A2**
(43) Date of publication of application: **18.11.2009**
(21) Application number: 09251319.1
(22) Date of filing: 14.05.2009
(51) Int. Cl.: G06F 21/20

(54) **Identity verification**

(30) Priority: 14.05.2008 GB 0808752
(71) Applicant: Burden, Robert W.W., West Vancouver BC (CA)
(72) Inventor: Burden, Robert W.W., West Vancouver BC (CA)
(74) Representative: Carter, Stephen John

(57) **Abstract**

The invention provides a method for verifying the identity of an entity to a computerised system. The entity is in possession of a personal identification device (PID) having a PID ID and storing a Codec that can be used to encode and decode data. The computerised system holds data associated with the entity including the PID ID of the entity's PID, the Codec and a password associated with and known to the entity. The method involves transmitting an encoded Challenge from the computerised system to the PID, calculating a Reply using the Challenge and the password entered by the user, and transmitting the Reply from the PID to the computerised system. The transmitted Reply is compared with a reply calculated by the computerised system and the identity of the entity is verified if the comparison determines that Replies are the same.

## Description

### FIELD OF THE INVENTION

This invention has to do with systems and methods for verifying the identity of an entity, e.g. an individual, corporate entity or other 'legal person'. It has particular (although not necessarily exclusive) application in positively identifying an individual to allow (or in the case of a failed identification to deny) access to a service or physical access to a location.

Exemplary applications for embodiments of the present invention include verifying the identity of the user of an ATM and the customer in a Point of Sale (POS) transaction (in place of conventional PIN-based debit and credit card transactions). The proposed approach might also be used to provide passport-type identification of an individual (e.g. at border entry / crossing points), to replace other forms of ID (e.g. drivers licences, ID cards, etc) and as a 'key' to provide access to or operate the ignition of a vehicle, or to provide access to a home or office for example.

### BACKGROUND

The conventional approach to verifying the user in an ATM transaction or the user (i.e. purchaser) in a POS transaction is by way of a four digit PIN (personal identification number). The PIN is usually stored on the user's credit or debit card (either on a magnetic strip or a 'chip' affixed to the card). To verify their identity, in order to complete a transaction, the user's card is inserted into the ATM or POS device and the user enters their (secret) PIN using a keypad of the device. The ATM or POS device reads the user's PIN from the card and compares it with the PIN that has been entered. If they match, the identification is completed and, subject to any other conditions that might apply (e.g. available credit) the transaction can proceed. If they do not match, then (sometimes after the user has been given one or more further opportunities to enter a matching PIN) the identification process is terminated and the transaction is prevented.

One weakness in this conventional approach is that the user may be observed entering their PIN (either directly or using a camera). This can result in a supposedly secret PIN becoming known to others, which is clearly undesirable.

Another weakness is the necessity for the user's PIN to be made available to the ATM or POS device (both by reading from the user's card and by the user keying the PIN into the device). If the ATM or POS device has been tampered with, the transfer of the PIN to the device may make the PIN (as well as other details read from the user's card) available to others, facilitating fraudulent use of these details.

Yet another weakness arises in the case where the PIN is stored on the user's card. If the card is stolen it may be possible for a third party to extract the PIN (and other details) from the card, again facilitating fraudulent use of these details.

Credit/debit card fraud is a serious issue and much effort is expended to minimise the risks of card details and PINs being compromised. Nevertheless, no satisfactory alternative has been found to replace the conventional card/PIN approach and the possibility of compromise of the card information and PIN remains a real problem.

### SUMMARY OF THE INVENTION

The present invention is generally concerned with verifying the identity of an entity. The entity may be, for example, an individual, a corporate entity or some other'legal person'.

Embodiments of the invention are concerned with verifying the identity of an entity to a computerised system, for instance an ATM system, a POS system, an e-commerce system, a vehicle or building lock access system, a vehicle ignition system, an identity verification system (e.g. at a border control post), etc.

A general proposal of embodiments of the present invention is to conduct a process to identify an entity that employs a secret password (known only to the entity and a trusted entity to which they are verifying their identity) but that avoids transmission of the password and avoids storing any permanent record of the password on any physical storage medium in the possession of the entity. As noted above, in many envisaged embodiments the "entity" being identified is an individual.

Another general proposal of embodiments of the invention is to encode messages transmitted between the individual and the trusted entity using a Codec (i.e. an encoding / decoding algorithm) that is unique to the particular entity (e.g. individual)/trusted entity relationship.

Especially in embodiments where both of these general proposals are adopted, there is very little opportunity for a hostile third party to steal or duplicate information that they can later use to conduct fraudulent transactions.

In a first aspect, the invention provides a method for verifying the identity of an entity to a computerised system, the entity being in possession of a personal identification device (PID) having a PID ID and storing a Codec that can be used to encode and decode data, and the computerised system holding data associated with the entity including the PID ID of the entity's PID, the Codec and a password associated with and known to the entity, the method comprising:
a user entering the password into the entity's PID;
transmitting the PID ID from the PID to computerised system;
the computerised system generating a Challenge and encoding the Challenge using the Codec;
transmitting the encoded Challenge from the computerised system to the PID;
receiving the encoded Challenge at the PID and decoding the Challenge at the PID using the Codec;
the computerised system calculating a first instance of a Reply using the Challenge and the password;
the PID calculating a second instance of the Reply, using the same calculation as the computerised system using the decoded Challenge and the password entered by the user, and encoding the second instance of the Reply using the Codec;
transmitting the encoded Reply from the PID to the computerised system;
receiving the encoded Reply at the computerised system and decoding the Reply at the computerised system using the Codec;
comparing the decoded second instance of the Reply with the first instance of the Reply; and
verifying the identity of the entity if the comparison determines that the first and second instances of the Reply are the same.

In this aspect, and those set forth below, in the case where the 'entity' whose identification is being verified is an individual, the user will typically be (and generally should be) that individual.

In a second aspect, the invention provides a method for verifying the identity of an entity to a computerised system, the entity being in possession of a personal identification device (PID) having a PID ID and storing a Codec that can be used to encode and decode data, and the computerised system holding data associated with the entity including the PID ID of the entity's PID, the Codec and a password associated with and known to the entity, the method comprising:
receiving at the computerised system a PID ID transmitted from the PID;
generating a Challenge and encoding the Challenge using the Codec;
transmitting the encoded Challenge from the computerised system to the PID;
calculating at the computerised system a first instance of a Reply using the Challenge and the password;
receiving an encoded second instance of the Reply at the computerised system;
decoding the Reply at the computerised system using the Codec;
comparing the decoded second instance of the Reply with the first instance of the Reply; and
verifying the identity of the entity if the comparison determines that the first and second instances of the Reply are the same.

In a third aspect, the invention provides a method for verifying the identity of an entity to a computerised system, the entity being in possession of a personal identification device (PID) having a PID ID and storing a Codec that can be used to encode and decode data, and the computerised system holding data associated with the entity including the PID ID of the entity's PID, the Codec and a password associated with and known to the entity, the method comprising:
a user entering the password into the entity's PID;
transmitting the PID ID from the PID to computerised system;
receiving an encoded Challenge at the PID from the computerised system and decoding the Challenge at the PID using the Codec;
the PID calculating a Reply using the decoded Challenge and the password entered by the entity, and encoding the Reply using the Codec; and
transmitting the encoded Reply from the PID to the computerised system.

The calculation to create the Challenge preferably involves a random number. It may also involve the password but in some case it may be preferable that the password is not used in calculating the Challenge.

The calculation of the reply preferably uses a random number (available to both the PID and the computerised system) in addition to the Challenge and the password. Any given random number is preferably only used for a single Reply calculation and then deleted from the PID's memory.

Where a different random number is to be used in this way for the calculation of the Reply, a set of random numbers, for sequential use, may be stored on the PID. Once the set of Random numbers have all been used, or more preferably at some point in time before they have all been used, a fresh set of Random numbers may be supplied to the PID, for example by the computerised system. For instance, the computerised system may send a new set of random number to the PID during or at the end of a transaction, one or more of these new random numbers to be used in the next and/or subsequent transactions.

The PID and the computerised system may additionally store a relationship ID, such as an account number, which can be used to identify a particular relationship between the entity and the computerised system, e.g. a particular credit or bank account and/or to identify the specific computerised system with which the identification process is to be completed. This relationship ID can be transmitted from the PID to the computerised system at the start of the identity verification process, typically along with the PID ID in the same transmission.

The use of a relationship ID in this way enables a single PID to be used for verifying the entity's identity for more than one relationship; the PID can store a plurality of relationship IDs from which the entity can select when they initiate the identification process. A different password may, and preferably is, used for each relationship.

The password may be a simple PIN (e.g. a four digit number). Alternatively it may be a longer number, an alpha only password or an alphanumeric password.

The Codec is preferably unique to the entity. Where the PID is configured to manage multiple relationships, it is preferable that each relationship employs its own unique Codec.

The Codec may use any of a number of suitable encoding/decoding algorithms. Generally the Codec will be based on a symmetric key cryptographic approach.

The transmission of data between the PID and the computerised system may be effected through an input interface device that is in communication with the computerised system (or forms part of the system) and to which the PID can be connected (with a wired or wireless connection) for communication. In the case where the computerised system is a payment system, the input interface device might, for example, be an ATM or a POS device.

It is envisaged that the user will generally enter the entity's password (e.g. PIN) into the PID before they connect the PID to the input interface device. Especially in the case of input interface devices in public locations, such as ATMs and POS devices, this enables the user to enter the password in a location where they cannot be overlooked. In other cases, however, for example when using the PID to conduct e-commerce transactions in a private location, it may not be necessary to enter the password into the PID until later in the process (at some time prior to its use to calculate the Reply).

Whenever in the process the password is entered, it is preferably encrypted straightaway (using the Codec) and the plain text version immediately erased from the memory of the PID. When the password is needed to calculate the Reply, it can be decrypted using the Codec and, once used, erased (preferably immediately) from the memory of the PID entirely (i.e. neither an encrypted or decrypted version of the password is stored on the PID other than during a verification procedure).

Once the entity's identity has been verified the computerised system may proceed to authorise, action or complete a desired function. The desired function may, for example, be a financial transaction, the provision of information, a service or goods, enabling access to a physical location, or simply positively identifying the entity.

The computerised system may send a message to the PID (or the input interface device) to confirm to the entity that their identity has been verified.

In some embodiments, the verification process may involve a third party intermediary system, that receives and forward the messages between the PID and the computerised system, or in some cases temporarily stores some or all of the transmitted data for use during a transaction. One example of a third party intermediary system is an e-commerce web server, as exemplified further below.

In a fourth aspect, the invention provides a system for verifying the identity of an entity to a computerised system, the system comprising:
a personal identification device (PID), for possession by the entity, the PID having a memory storing a PID ID and a Codec that can be used to encode and decode data, and means for entering a password into the PID;
a computerised system comprising memory storing data associated with the entity including the PID ID of the entity's PID, the Codec and a password associated with and known to the entity; and
an input interface device that is capable of communication with the computerised system and to which the PID can be connected;
the PID and the computerised system being programmed to operate in accordance with the methods set forth above to verify the identity of the entity without transmitting the password from the PID to the computerised system.

In a fifth aspect, the invention provides a personal identification device (PID) for use by an entity in a process for verifying the identity of the entity to a computerised system, the PID having a memory storing a PID ID and a Codec that can be used to encode and decode data; means for entering a password into the PID; and a processor that is operable to cause the PID to operate in accordance with the method of the third aspect set forth above to verify the identity of the entity without transmitting the password from the PID to the computerised system.

In a sixth aspect, the invention provides a computerised system that is programmed to operate in accordance with the method of the second aspect set forth above to verify the identity of an entity without transmitting the password from the PID to the computerised system.

In a seventh aspect, the invention provides a software application comprising computer program code that when installed and executed on a computerised system causes the computerised system to operate in accordance with the method of the second aspect above.

In an eighth aspect, the invention provides a software application comprising computer program code that when installed and executed on a handheld computer (e.g. mobile telephone, smart phone, PDA, etc) causes the handheld computer to operate in accordance with the method of the third aspect above.

### BRIEF DESCRIPTION OF THE DRAWINGS

Preferred embodiments of the invention are now described by way of example, with reference to the accompanying drawings in which:
Fig. 1 is a schematic overview of a system in accordance with an embodiment of the present invention;
Figs. 2A and 2B illustrate the process by which the system of fig. 1 can be used to verify the identity of a user in a secure transaction (e.g. a financial transaction such as cash withdrawal or purchase);
Figs. 3A and 3B illustrate the process, in accordance with another embodiment of the invention, by which the identity of a user can be verified in the context of an e-commerce transaction;
Fig. 4 is a schematic overview of a system on which the process of figs. 3A and 3B can be implemented;
Figs. 5A to 5F illustrate an example interaction of a user with their PID during an identity verification process for an ATM transaction; and
Figs. 6A to 6E illustrate an example interaction of a user with their PID during an identity verification process for a passport transaction.

### DETAILED DESCRIPTION

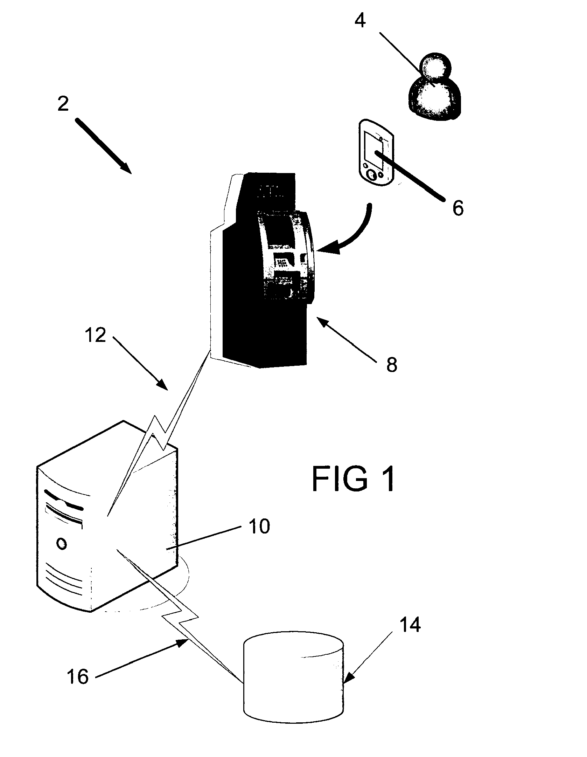

Fig. 1 shows the main components of a system 2 in accordance with an embodiment of the invention. The embodiment is illustrated here with reference to its use in an ATM network but it will be appreciated that the concepts being described are applicable to other 'transactional' networks in which it is necessary to positively identify a user. Embodiments of the invention also have application in non-transactional scenarios, for example identifying an individual to a secure (physical) access point (e.g. a locked door) or otherwise providing a positive identification of the user (e.g. at a border control post).

### System Overview

The system 2 of fig. 1 enables a user 4 (e.g. the customer of a bank) to conduct a transaction (e.g. a cash withdrawal) with a computer system 10 (e.g. a bank system or other institutional system). The transaction is conducted by the user 4 using a 'personal identification device' 6 (referred to as a PID hereinafter) that is in the personal possession of the user 4. The PID 6 is configured to communicate with an input interface device, in this example an ATM 8, which is in communication with the computer system 10 via a network link 12.

The user 4 is in possession of a PIN (or other secret password). This password may be a conventional 4-digit numeric PIN. Alternatively, it may be numeric, alpha, or alphanumeric password of greater length (or lesser length). A password containing alpha characters could be treated as the sum of the ASCII value of each character used. One benefit of using alpha numeric passwords is that they can be longer whilst still be relatively easy for the user to remember.

Significantly, the user's PIN is not permanently stored on the PID 6. Nor does the transaction involve the use of a conventional credit/debit card on which their PIN is permanently stored.

The PID 6 may comprise various parts such as a PID unit, a card read/write unit, a battery charger and various cable connections such as a USB interface for use in e-commerce applications, as discussed further below.

The PID 6 itself has a unique PID identification code capable of identifying the individual PID (i.e. the physical device). Also stored in a memory on the PID is a Codec file used as an encryption / decryption key for messages sent from the PID 6 to the computer system 10 via the ATM (or other interface) 8 and *vice* versa.

The PID 6 may be a bespoke device. Alternatively, the PID functionality described below may be provided by suitable software and/or hardware components incorporated into a more general purpose device such as a mobile telephone, handheld computer (e.g. PDA) or the like.

It is also possible for the PID to be configured to operate with more than one user identification system. Where this is the case, the PID will additionally store a corresponding number of function or relationship identifiers (e.g. account numbers, passport number, drivers licence number, door lock id, etc), enabling the user to select which function they wish to use the PID for at the beginning of an identity verification process.

The computer system to which the user is being authenticated may, as already suggested above, comprise a large network system including a multitude of input interface devices 8 (e.g. ATMs or POS devices) and the institutional computer system 10 being accessed. Alternatively, for example in the case of a simple door lock, the input interface device 8 and the computer system 10 may be integrated within a single unit on or near the door in question.

A copy of the user's PIN (or other password) and a copy of the Codec file stored on the user's PID are securely held in a database 14 accessible (via a secure connection 16) to the computer system 10 (along with the passwords and Codecs for other users of the system).

The input interface device 8 is the interface via which the individual user 4 can use their PID 6 to identify them to the system. The interface device 8 may be an ATM machine (as in the exemplary system illustrated in fig. 1), a point of sale machine or a secure access point such as a door or manned security point for instance, or in the case of an e-commerce transaction the interface device 8 may be a PC connected to the Internet for example.

The communication links 12 between the various components of the system could be hard wired or wireless. Whilst the communication links may be secure, embodiments of the invention can be used in scenarios where the communication between the PID 6 and the input interface device 8, and/or the communication between the input interface device 8 and the computer system 10 are less secure (or even over a public network) because, as explained further below, at no point is the user's PIN transmitted over these links, either in an encrypted or unencrypted form.

### Security Objectives

Before considering the operation of the system of fig. 1 in more detail, it is useful to briefly consider the security objectives that the system has been designed to address. In general the security objectives of a remote identification system are to provide a means of identifying a person at a distance with a means that cannot easily be stolen, copied or overcome. The current risks include:
a/ Individuals who do not keep their PIN numbers secure.
b/ The loss, theft or duplication of the Identification Medium (e.g. credit/debit card, passport, etc) containing valuable data.
c/ The Hacking or interception of electronic data during the identification process.
d/ Third party use of the Identification Medium with or without the owner's consent such as family members of the individual.
e/ For the purposes of Internet identification certain additional obstacles need to be overcome or guarded against. The first of these is the keystroke recorder that could be used by a hostile third party to record the keystrokes of the individual and hence gain their Internet access codes. The second obstacle is to prevent a hostile third party hacker from gaining any useful information from the individual's computer before, during or after an Internet session between the individual and the remote institution.

These particular risks are significantly reduced by the methods detailed herein although access to the data that may become available during a transaction may still be possible. For example it may be possible for a hostile third party to observe bank statement data without being able to gain access to the funds themselves. Ultimately the security of a remote personal computer must rest with the individual who is the only person who can take responsibility for maintaining suitable Anti Virus and Spyware software in an active state and up-to-date.

The system detailed is aimed at addressing all of the risks identified above except a/. There is no defence against the individual's own sloppy security measures without removing them from the process entirely. However, it is possible that placing a much higher reliance on the PID due to its potential variety of uses may increase the individual's appreciation for the need for personal security habits.

### Overview of System Operation

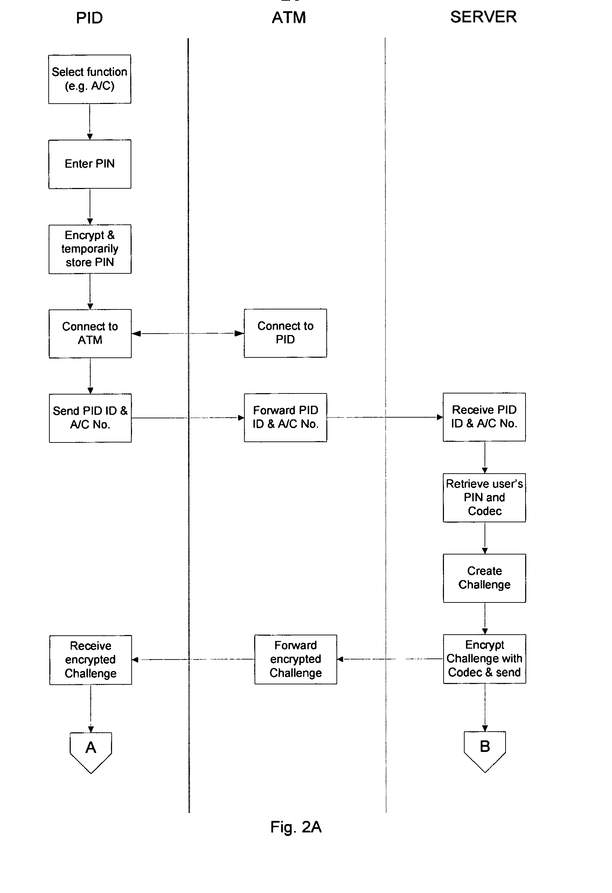

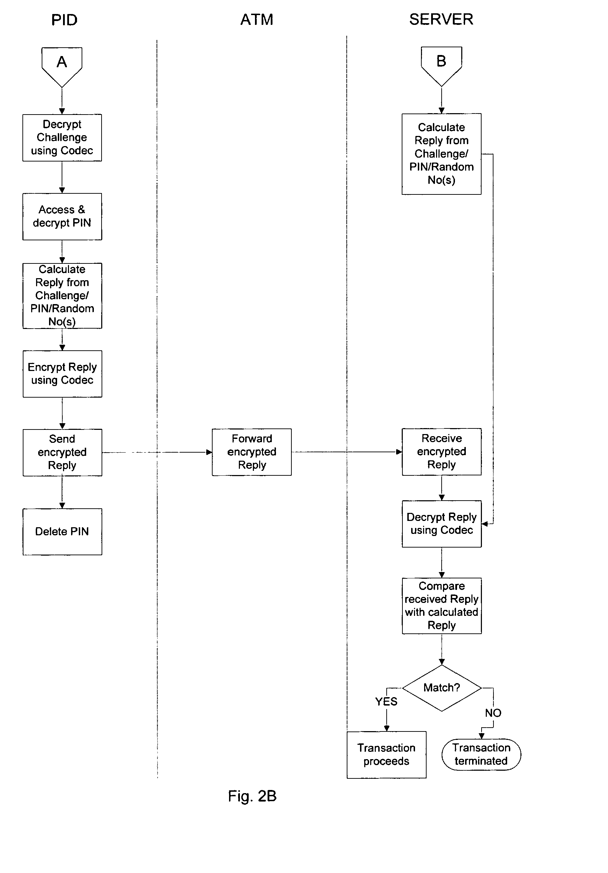

Fig. 2 shows an outline of the process steps involved when an individual user wishes to complete a transaction in the system of fig. 1.

In this example, it is assumed that the PID is configured to operate with multiple identity verification systems. The first step in the process is therefore for the user to select the desired function (e.g. the bank account or credit account with which they wish to transact). The user then also enters the PIN for the selected account (or other function) into the PID, e.g. using either a keypad or touch-screen incorporated into the device. Advantageously, these two steps can be completed at a convenient and secure location, minimising the risk that a third party sees the entry of this information.

This account/function selection and entering of the PIN into the PID is completed shortly before the use of the PID because the PIN is only stored in volatile memory in the PID for a set (preferably short) time period.

Upon pressing an 'Enter' button (or similar action) the PIN is encoded using the individual's unique Codec file contained within the PID and the plain text version of the PIN is immediately erased.

The Codec file contains the data / instructions used to encode/encrypt data that is sent between the PID and the computer system (e.g. Institutional servers) with which the user is transacting. In some embodiments, the PID may store a plurality of different Codec files. In this way, for instance, each PID / Individual / Institution relationship can have its own unique Codec associated with the relationship, providing greater security to the transactions. The PID may well contain many Codec Files for dealing with many PID / Individual / Institution combinations.

Loading Codec File data to the PID is preferably carried out at selected, secure, ATMs inside financial institution property.

The PID could be designed so that it can access data from the institution via an ATM such as account status obviating the printer and waste paper around the ATM.

The PID stores the encoded PIN number in a volatile electronic memory location for a suitable (pre-settable) time period, e.g. ten minutes, after which time it is automatically erased from memory. While in this volatile memory location the PIN cannot be accessed by the decoding part of the PID software except for a single process and only then when the Challenge (see below) has been successfully decoded. The PID may have a 'Clear' button that can delete the encrypted PIN number when pressed should the individual feel the process is threatened in any way.

When the individual accesses the interface device (i.e. ATM in the illustrated example) connected to the system (i.e. the Institution, e.g. bank, server(s) in the example) and is ready to commence the identification process, and upon instruction from the interface device, the PID is plugged directly into the interface device via a suitable plug and socket (USB 2.0, Fire wire, PC Card Slot or other suitable purpose built connection). Alternatively this connection between the PID and the interface device may be a wireless (e.g. WiFi, Bluetooth, RF, etc).

The PID's own unique Identification number and the selected account number, preferably in encrypted form, are transmitted to the system that can then identify the individual and load the system's copy of the individual's Codec File into memory. The PID ID and account number can be encrypted at this stage using any suitable universal encryption system since at this point in time the system cannot identify which Codec file to select. For instance, the encryption at this stage can use a Codec that is common to all PID / Individual / Institution relationships.

The system already knows the individual's PIN number; however instead of asking for it, two calculations are made. The first creates a random number that is based upon a preset formula (hereafter called the Challenge), which is stored only in the system's computer (server in the example in fig. 2). This Calculation could be as simple as the PIN number multiplied by a random number or something more complicated. The calculation of the Challenge need not involve the PIN at all. The 'Challenge' is then encoded using the unique Codec File for the specific relationship in question and is then transmitted to the PID where it is decoded.

The second calculation (hereafter called the 'Reply') is one that both the Institutional computer and the PID must be capable of. It must involve the PIN and the 'Challenge' and preferably also a random number. This could be as simple as the 'Challenge' divided by the PIN multiplied by the random number for example or something more complex.

In the case where a random number is used in the calculation of the Reply it is necessary that the PID has access to the random number. It is also preferable that a new random number is used for each successive calculation / transaction. To enable this, the PID and the Institutional computer may both store a list of random numbers to be used sequentially. In some cases, the Institutional computer may supply the random numbers to the PID regularly or at specific intervals. For instance, the Institutional computer may transmit new random numbers to the PID during or at the end of a transaction, these new random numbers to be used in the next and/or subsequent transactions. A new set of Random numbers sent to the PID may replace any unused Random numbers remaining from the existing list on the PID (i.e. the remaining existing numbers are deleted on receipt of the fresh list) or the new numbers may be appended to the end of the existing list.

Random numbers stored in the PID's memory may be encoded, for example using the same Codec file that is used to encode the PIN (the original plain text versions, if any, being immediately deleted). Sets of Random numbers sent from the computerised system to the PID are also preferably encoded for transmission, for instance using the Codec. Once a random number has been used by the PID for a transaction it is preferably deleted from the PID's memory.

The random numbers used for calculation of the Challenge and the Reply are preferably high quality random numbers of the 'mechanical' "ERNIE"-type. Pseudo random number generators are less suitable. Any of a number of existing, tried and tested, techniques for generating random numbers can be used.

With a Challenge loaded and successfully decoded by the PID using the same, unique, Codec file, the PID is now enabled to access the encoded PIN number it has stored (and the encoded random number where used), which it decodes and performs the second calculation involving the PIN number, the random number (where applicable) and the Challenge (i.e. the same calculation conducted at the Institution's server) to calculate the Reply. In some embodiments more than one of the Random numbers may be used to calculate a Reply. The number of Random numbers to use (0, 1, 2, etc) and/or the formula for the calculation may also change between successive calculations. The formula for each calculation can, for example, be supplied to the PID along with the sets of Random numbers. Where this approach is taken each formula is preferably deleted from the PID's memory along with the Random number(s) used once the Reply has been calculated.

The resultant Reply is, once again, encoded using the unique Codec file and transmitted from the PID to the system. The PIN number in the PID is then deleted from memory, so no permanent record if it (in either decoded or encoded form) remains.

If the Reply received by the system from the PID, once successfully decoded, matches the Reply already calculated by the system then the identification is verified and the transaction is given the go ahead and, for example, assigned a transaction number by the system. The 'transaction' may be a financial transaction (e.g. a cash withdrawal) but, more generally, it can be considered as the desired result of the identification process, other examples including the unlocking of a door or the identification of an individual at a passport control point.

At any instant if the PID is disconnected (e.g. unplugged) from the interface or a power failure occurs the PID and system may be configured to instantly terminate the identification process.

Through the use of this system a number of beneficial security measures can be enacted. Perhaps most significantly, the users PIN is neither permanently stored on any medium that might be stolen from them or'cloned', nor is it transmitted across any network or even between devices. As can readily be seen from fig. 2, the only data that passes through the ATM (or other interface device), generally the 'weak' point in the system, are the encrypted Challenge and Reply.

The following beneficial security measures can also be enforced by using the exemplified system:
a/ The PIN could only be acquired by a hostile third party through coercion wrought upon the individual or by the theft and use of the PID while the PIN is active in the memory. Both of these options presumably involve a violent act.
b/ The system will know from the PIN, PID ID Number, the Account Number AND the use of the correct Codec File that the correct individual is at one end of the network connection.
c/ The individual will know from the PID's ability to decode the Challenge that the system is the other end of the network connection and not an imposter.
d/ Theft or loss of the PID can only give any hostile third party access to data that can be changed the instant the theft or loss is discovered and will not give them data that will allow access to any account.
e/ The acquisition of the PID by a hostile third party cannot give them access to any other individuals security processes.
f/ Even if a hostile third party gained access to the Codec file for a particular relationship they still do not have access to how the Codec file will be used in that relationship. Only through possession of the PID and by reverse engineering each PID can they learn how that particular PID handles these functions. This takes time and allows the individual time to report the loss or theft of their PID.
g/ No data of use to hostile third parties need be contained in the PID. For example if it were used as a Passport the data could be stored upon a secure government computer complete with pictures and visas so that possession of the PID does not identify the individual owner, their address or any other relevant data about them. Only through the use of the correct PIN can any data be elicited from any system.

### Calculation of the Challenge & the Reply

To aid a better understanding of this important aspect of embodiments of the invention, it is useful to give an example of how the Challenge and Reply might be calculated. It should be appreciated, however, that this is just one of a very great number of calculations that could be used.

### Example:

The individual's PIN for the selected relationship is 1289

The PID's own Identification Number is AB100987652475129 and the Account Number is 1100.

When the system computer receives the ID of the PID (AB100987652475129) and the account number (1100), both in some encrypted form, it looks up the following data.
a/ The Codec file used with that PID / Individual / account number combination and, where appropriate, the instructions for using the Codec for that relationship based upon for example date and PID ID number.
b/ The individual's PIN No. stored in memory (i.e. 1289)
c/ The Calculation for use with that PID / PIN combination to be used for calculation of the Challenge.
d/ Any random number it may need for the calculation of the Challenge.
e/ The random number needed for calculation of the Reply (in this example 193).
f/ The Calculation for use with that PID / PIN combination used for calculating the Reply, which is also stored in the PID.

The system computer calculates the Challenge, for example the integer result of a PIN multiplied by a random number or simply an integer random number determined without using the PIN. In the present example let's assume the Challenge is 2175. The Challenge is then sent to the PID after encoding it with the unique, pre-selected, Codec file. The system computer also performs the PID's Calculation (according to the PID's ID No. and account number combination) as shown below and stores the answer (i.e. Reply), while awaiting a reply from the PID.

In this example, to calculate the Reply, the PID takes the Challenge (2175) and multiplies it by the PIN (1289) and the random number (193), the random number being taken from a list stored on the PID and/or having been previously supplied to the PID by the system computer (e.g. at the conclusion of a preceding transaction). In this example, the reply is therefore 2175 x 1289 x 193 = 541089975. The PID then sends this calculated reply back to the system in encoded form. The actual calculation used may employ any of a great variety of possible formula, including division, addition, subtraction and/or other mathematical operators in addition to or in place of multiplication. The calculation may also, in some embodiments, use more than one random number and/or may use the or each random number, the Challenge and/or the PIN more than once for example.

The system decodes the Reply and compares it with the result of its own reply calculation which it has stored in memory and if they match it authorizes the identification and the transaction can proceed. The transaction could be to open a car boot, show Passport data or produce cash through an ATM, as discussed above.

Without knowing the two Calculation requirements, one for that particular PID and one at the Institution for that particular PID there is no logical connection between the three numbers 2320, 38 and the PIN number 1289. Since a random number is involved these numbers should not repeat very often (possibly not at all, depending upon the abilities of the system used and the speed required).

Because the two calculations are different and the instructions for using the Codec could change with every consecutive usage, hostile third parties, with a reverse engineered PID, who are able to crack what is in effect a one-time code, might just be able to elicit a Challenge from the system but will still be unable to determine the PIN number of any individual.

### Security Features

As will be appreciated from the examples above, embodiments of the present invention provide a number of security features. It is helpful to reiterate and summarise them here.

The PIN number is only entered into the PID when the individual is ready to perform an identification and transaction and can be instantly cleared if required. Once the transaction is complete the PID erases the PIN from memory. If the PID is stolen or lost it is useless without the PIN number first being entered. If hostile third parties try to acquire the Codec File data it is still useless to them without the PIN number and does not help them access any other individual's accounts.

At no time is the PIN number transmitted over a network or accessible to whatever equipment the PID is plugged into. If it was accessed it would be encoded and useless without the individual's unique Codec file.

The PIN number can be entered into the PID in a secure location away from spying eyes and if the individual has cause for concern, for example in an Internet café or other public place, they may make their way to the transaction site with a finger on the 'Clear' button of the PID.

In some embodiments, one or any combination of two or more of the following security features might also be implemented.

The PIN number can be more than 4 digits (but any increase will increase the capability requirements of the PID's electronics).

The individual should only be able to edit the PIN number through secure devices such as an ATM actually inside the Financial Institutions offices.

The PID device should be self-powered (recharging itself from the equipment it gets plugged into) and able to automatically erase the PIN number if the device it is plugged into suffers a power failure. Provision could be made for a PIN alternative such as a distress signal that may elicit a suitable response from the Institution.

The PID should have a significantly longer life than the magnetic strip on a credit card and will need to be robustly constructed. The possibility of building other functions into the PID may be found beneficial.

Additional security features can be added depending upon the complexity desired and the system capacity. For example the Codec Files stored on the PID need not be associated with a relationship identifiable on the PID. When the PID ID and account number are sent to the system using a common Codec file available to all PIDs for encryption the system could send to the PID the name of the Codec file to be used and the instructions for using it. In this way any hostile third parties obtaining the PID have no means of knowing what combination of Codec file / instructions to use to attempt accessing the system. They are forced to try accessing the system the conventional way but without knowing the PIN number the system could be programmed to allow a maximum of three attempts before it renders th e PID ID invalid pending a face-to-face meeting with a system representative.

### E-commerce

E-commerce must, by definition, be a highly dangerous area of activity because it relies upon supplying enough of an individual's data to a third party for that third party to remove money from the individual's Credit Account without the individual being able to either evaluate the people they are doing business with or even knowing if they will be the ones to actually use the information. Obviously this data could be reused, sold, stolen, lost etc. etc.

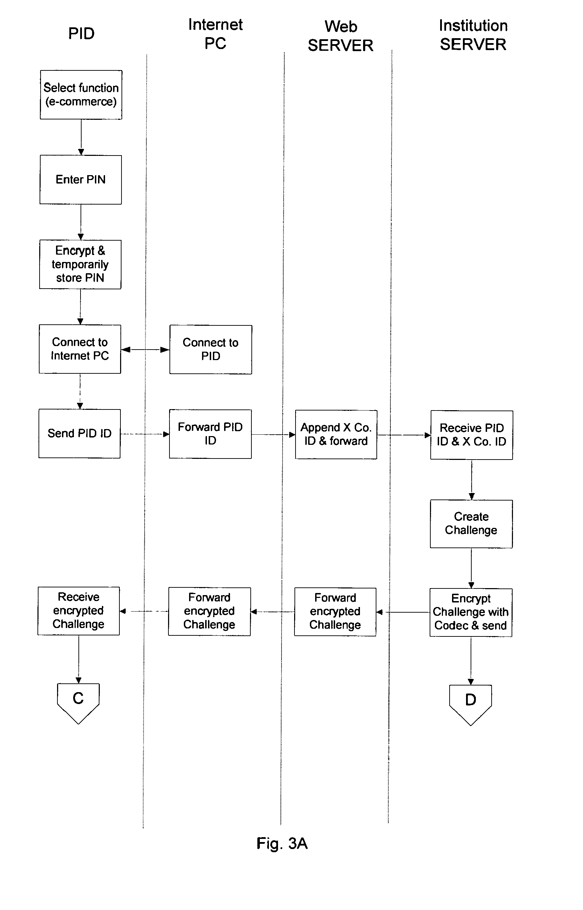

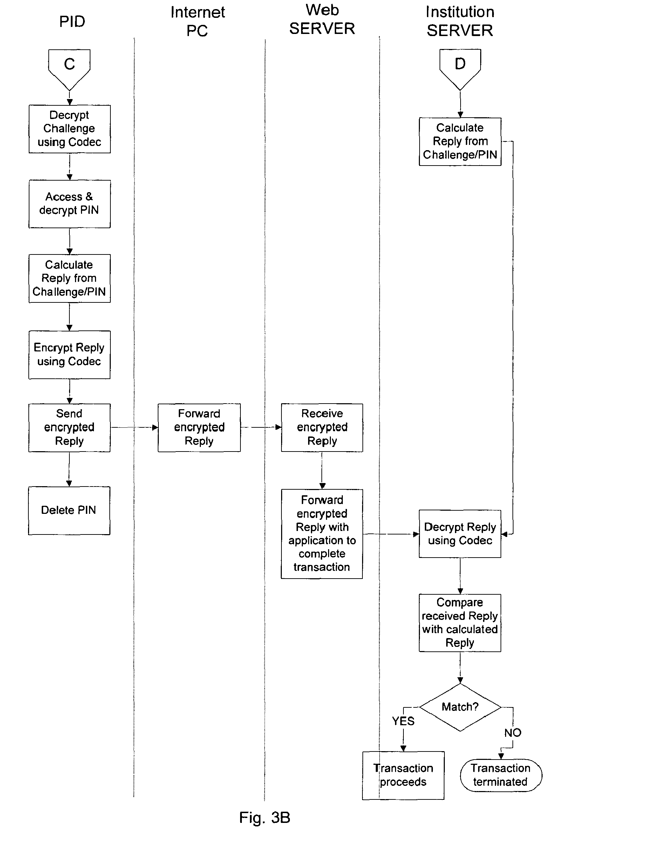

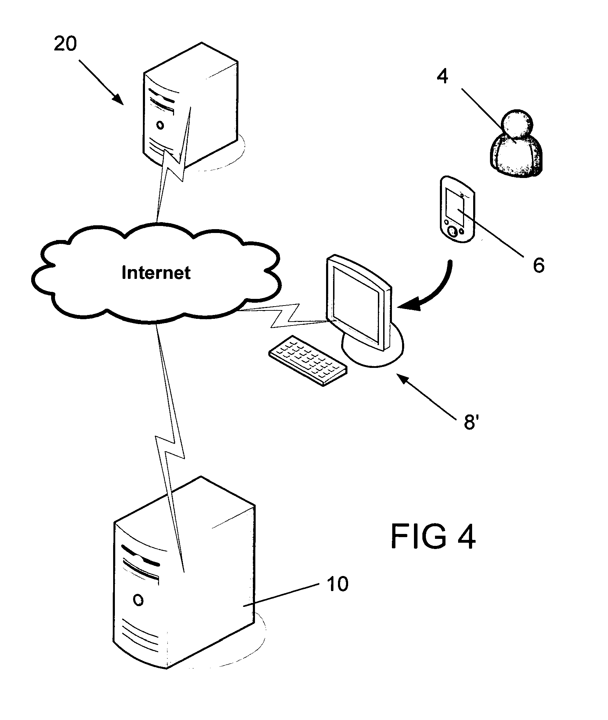

Further embodiments of the present invention propose a method of using a PID-based system to secure the e-commerce activity and prevent re-use of data transmitted to a third party during that activity, an example of which is illustrated in fig. 3, with reference to the schematic system diagram illustrated in fig. 4.

An individual 4 with an e-commerce enabled computer 8' wishes to buy a product from a site we will call for demonstration purposes "X Co. Ltd." The individual enters their PIN into the PID 6 which they then plug into the e-commerce enabled computer 8'. At a suitable point in the transaction the "X Co. Ltd." Web Server 20 uses the PID's identification Number together with its own Institution supplied 'PID ID' No. ("X Co. ID" in fig. 3) to get an encoded Challenge number from the Institution 10 which it passes back to the individual's PID 6 (via their web enabled computer 8') so that the PID 6 can perform its Calculation function, as described above, to determine a Reply to the Challenge.

The individual's PID 6 then transmits an encoded version of the Reply to the Web Sever 20, which stores it together with the PID Identification Number. The "X Co. Ltd." Server 20 then uses their own 'PID device' (which may be a virtual device, i.e. a software application) and their company's encrypted PIN (after the same Calculation process but using the company's PID, Codec File, Challenge and Reply) to apply to the Institution for the transaction to be completed in their favour. At the same time they may pass the individual's PID ID and encrypted Reply to the Institution, where it can be used as part of the process to authorise the transaction.

If the Institution does not accept the company's ID No. or the Company's encrypted PIN the transaction can be refused. Similarly, if the individual's identity is not properly verified by the Institution (using the individual's PID ID and encrypted Reply passed to the Institution by the Web Server) then the transaction can be terminated.

At no time does the individual's or the "X Co. Ltd's" PIN get transmitted over the network. The individual and the company have different Codec files and both encoded resultant Replies must be correct for the transaction to be completed. The companies' records may be written so they can associate the individual's name with the PID identification number but they have no further access to the individual's funds and if their data is lost or stolen the hostile third parties can only learn that so and so has a PID with a certain ID No. They cannot learn the Codec file or the PIN number.

A further built in safeguard may be used to guard against the same data ever being used again and there exists the possibility of building in another security process if required. The built in safeguard is the use of a Random Number in the Challenge Calculation, which in turn means a different Reply calculation result. Should the system be given the result from a previous calculation it should not match (Random numbers being what they are it is not impossible that they could but the odds are very much against it happening). In addition it is possible for the system to store the Challenge and Reply calculation results and look for any attempts to use them again and to monitor its own activities to ensure that the same numbers are never used twice.

### Further Examples

Two exemplary applications for the PID-based processes discussed above are given here to further aid the understanding of the concepts that are disclosed, especially from the user experience perspective to illustrate the user's interaction with the PID.

### ATM Process

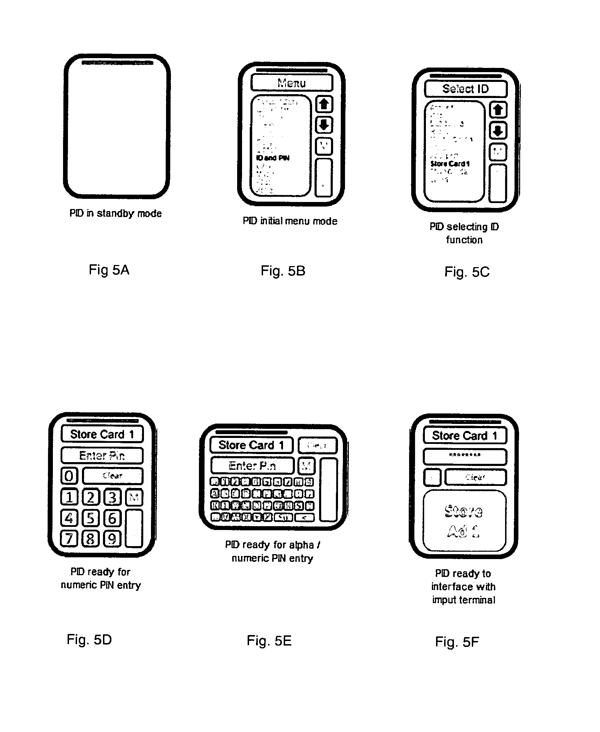

Reference is made here to figs. 5A to 5F, which illustrate the user's interaction with their PID prior to connecting the PID to an ATM.

Fig. 5A illustrates the PID in a Stand By mode. After switching the PID on from its Stand By mode the user selects from the Main Menu the function to be undertaken using the UP and DOWN keys. In this case it is ID and PIN that is required (fig. 5B).

Next (fig. 5C), the user selects the Financial service to be used (in practice this could read *Storename Visa, Bankname Visa, Bankname Amex* etc. etc. as appropriate).

The PID then displays a numeric keypad (fig. 5D) or an alphanumeric keypad (fig. 5E) to enable the user to key in their PIN. In the illustrated example the PID has a touch screen to facilitate this.

The user then enters the PIN and presses 'Enter' (fig. 5F). A timer bar can depict the amount of time remaining during which the PIN can be used. The individual could also use the 'Clear' button to remove the PIN from memory immediately, as discussed above. The PID is now ready for connection to the ATM.

Once connected to the ATM, the user verification procedure continues as discussed above in connection with figs. 1, 2A and 2B.

### ID Card Process

This process presumes that the individual has provided the relevant authority with all the necessary identification details including photograph(s) which have been entered into the computer system of the relevant authority.

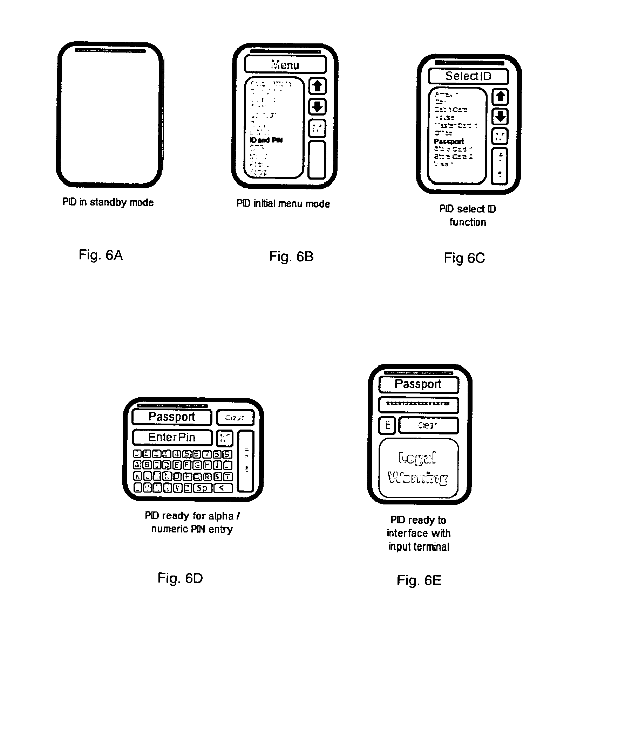

The user experience is described with reference to figs. 6A to 6E.

After switching the PID on from its Stand By mode (seen in fig. 6A) the user selects from the Main Menu the function to be undertaken using the UP and DOWN keys (fig. 6B). In this case it is ID and PIN function that is required.

The user then selects the Kind of ID to be used (in practice this could read *Employee ID, Driving License* etc. etc. as required). In this example, 'Passport' is selected (fig. 6C).

The user then enters their PIN number (fig. 6D), which in this example is preferably an alphanumeric PIN. Once the PIN has been keyed in, the user presses 'Enter' and the PIN display has a timer bar superimposed over it. The timer bar depicts the amount of time remaining during which the PIN can be used. The individual could also use the'Clear' button to remove the PIN from memory.

The individual now proceeds to the Passport checkpoint and when prompted inserts the PID into an appropriate receptacle via which it is connected to the computer system of the relevant passport authority. The verification of the user's identity then proceeds essentially as described above with reference to figs. 1 and 2, with the exchange of an encrypted Challenge and Reply. In this example the "account no." would be the user's passport number. Importantly, as with the examples above, the transmissions of the Challenge and the Reply are encrypted with the user's Codec (which may be unique to them, as discussed above), and the PIN itself is never transmitted. Nor is the PIN permanently stored on the PID.

Once the user's identity has been verified, the Passport data can be displayed on the checkpoint terminal on the side of the inspector who can ask questions, match photographs etc. etc until satisfied at which point permission to transit can take place.

As will be understood from the examples above, embodiments of the invention involve multiple levels of 'security'. The computerised system uses the PID ID to determine which specific PID it is dealing with. Based on that PID ID, and the account number (or other relationship identifier), the computerised system determines the correct Codec and password (e.g. PIN). If any one of these elements (PID ID, Codec, password) is not correct at the user end, the identification process will fail. Only a user with a PID having the correct PID ID, with the corresponding correct Codec stored thereon and with knowledge of the correct password to enter into the PID, will be able to successfully complete an identification process.

The skilled person will appreciate that various modifications can be made to the embodiments described above without departing from the invention. For instance, the embodiments described above are for the identification of an individual but the same concepts can be applied for the identification of other types of entity, such as corporate entities or other legal persons.

In a modification to the embodiments described above, as an alternative to connecting the PID to the input interface device, the data needed to complete the identification process can be written by the PID to a data carrier, the data carrier being used in conjunction with the input interface device to complete the identification process. For instance, in the case of an ATM transaction, the data carrier may take the form of a writable credit/debit-like card that is compatible with the ATM, the data being written to a magnetic strip or 'chip' on the card. The data is preferably only temporarily stored on the data carrier, being deleted as soon as (or at least soon after) the identification process is complete.

## Claims

1. A method for verifying the identity of an entity to a computerised system, the entity being in possession of a personal identification device (PID) having a PID ID and storing a Codec that can be used to encode and decode data, and the computerised system holding data associated with the entity including the PID ID of the entity's PID, the Codec and a password associated with and known to the entity, the method comprising:
a user entering the password into the entity's PID;
transmitting the PID ID from the PID to computerised system;
the computerised system generating a Challenge and encoding the Challenge using the Codec;
transmitting the encoded Challenge from the computerised system to the PID;
receiving the encoded Challenge at the PID and decoding the Challenge at the PID using the Codec;
the computerised system calculating a first instance of a Reply using the Challenge and the password;
the PID calculating a second instance of the Reply, using the same calculation as the computerised system using the decoded Challenge and the password entered by the user, and encoding the second instance of the Reply using the Codec;
transmitting the encoded Reply from the PID to the computerised system;
receiving the encoded Reply at the computerised system and decoding the Reply at the computerised system using the Codec;
comparing the decoded second instance of the Reply with the first instance of the Reply; and
verifying the identity of the entity if the comparison determines that the first and second instances of the Reply are the same.

2. A method for verifying the identity of an entity to a computerised system, the entity being in possession of a personal identification device (PID) having a PID ID and storing a Codec that can be used to encode and decode data, and the computerised system holding data associated with the entity including the PID ID of the entity's PID, the Codec and a password associated with and known to the entity, the method comprising:
receiving at the computerised system a PID ID transmitted from the PID;
generating a Challenge and encoding the Challenge using the Codec;
transmitting the encoded Challenge from the computerised system to the PID;
calculating at the computerised system a first instance of a Reply using the Challenge and the password;
receiving an encoded second instance of the Reply at the computerised system;
decoding the Reply at the computerised system using the Codec;
comparing the decoded second instance of the Reply with the first instance of the Reply; and
verifying the identity of the entity if the comparison determines that the first and second instances of the Reply are the same.

3. A method for verifying the identity of an entity to a computerised system, the entity being in possession of a personal identification device (PID) having a PID ID and storing a Codec that can be used to encode and decode data, and the computerised system holding data associated with the entity including the PID ID of the entity's PID, the Codec and a password associated with and known to the entity, the method comprising:
a user entering the password into the entity's PID;
transmitting the PID ID from the PID to computerised system;
receiving an encoded Challenge at the PID from the computerised system and decoding the Challenge at the PID using the Codec;
the PID calculating a Reply using the decoded Challenge and the password entered by the entity, and encoding the Reply using the Codec; and
transmitting the encoded Reply from the PID to the computerised system.

4. A method according to any one of claims 1 to 3, wherein the calculation to create the Challenge involves one or more random numbers.

5. A method according to any one of claims 1 to 4, wherein the calculation of the reply uses one or more random numbers available to both the PID and the computerised system.

6. A method according to claim 5, wherein
(a) the same random number is not used in consecutive Reply calculations; and/or
(b) once used the random number is deleted from the PID; and/or
(c) wherein sets of random numbers are supplied to the PID by the computerised system, new sets of random numbers being sent to the PID during or at the end of a transaction for use in subsequent transactions.

7. A method according to any one of the preceding claims wherein the PID and the computerised system additionally store a relationship ID that can be used to identify a particular relationship between the entity and the computerised system.

8. A method according to claim 7, wherein
(a) the relationship ID is transmitted from the PID to the computerised system at the start of the identity verification process; and/or
(b) the Codec used is selected based on the particular relationship between the entity and the computerised system.

9. A method according to any one of the preceding claims, wherein the Codec is unique to the entity.

10. A method according to any one of the preceding claims wherein the transmission of data between the PID and the computerised system is effected through an input interface device that is in communication with the computerised system or forms part of the system and to which the PID can be connected for communication.

11. A method according to claim 13, wherein the user enters the entity's password into the PID before they connect the PID to the input interface device.

12. A method according to any one of the preceding claims wherein the password is encrypted straightaway once entered into the PID and the plain text version immediately erased from the memory of the PID.

13. A method according to any one of the preceding claims, wherein the verification process involves a third party intermediary system, that receives and forwards the messages between the PID and the computerised system.

14. A system for verifying the identity of an entity to a computerised system, the system comprising:
a personal identification device (PID), for possession by the entity, the PID having a memory storing a PID ID and a Codec that can be used to encode and decode data, and means for entering a password into the PID;
a computerised system comprising memory storing data associated with the entity including the PID ID of the entity's PID, the Codec and a password associated with and known to the entity; and
an input interface device that is capable of communication with the computerised system and to which the PID can be connected;
the PID and the computerised system being programmed to operate in accordance with any one of claims 1 to 16 to verify the identity of the entity without transmitting the password from the PID to the computerised system.

15. A personal identification device (PID) for use by an entity in a process for verifying the identity of the entity to a computerised system, the PID having a memory storing a PID ID and a Codec that can be used to encode and decode data; means for entering a password into the PID; and a processor that is operable to cause the PID to operate in accordance with the method of claim 3 to verify the identity of the entity without transmitting the password from the PID to the computerised system.

16. A computerised system that is programmed to operate in accordance with the method of claim 2 to verify the identity of an entity without transmitting the password from the PID to the computerised system.

17. A software application comprising computer program code that when installed and executed on a computerised system causes the computerised system to operate in accordance with the method of claim 2.

18. A software application comprising computer program code that when installed and executed on a handheld computer causes the handheld computer to operate in accordance with the method of claim 3.
